(19) **Europäisches Patentamt / European Patent Office / Office européen des brevets**

(11) **EP 4 485 035 A1**

(12) **EUROPEAN PATENT APPLICATION**
published in accordance with Art. 153(4) EPC

(43) Date of publication:
**01.01.2025 Bulletin 2025/01**

(21) Application number: **22928942.6**

(22) Date of filing: **19.12.2022**

(51) International Patent Classification (IPC):
**G02B 21/00** (2006.01)          **G01J 1/04** (2006.01)
**G02B 21/36** (2006.01)

(52) Cooperative Patent Classification (CPC):
**G01J 1/04; G02B 21/00; G02B 21/36**

(86) International application number:
**PCT/JP2022/046752**

(87) International publication number:
**WO 2023/162425 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022 JP 2022026980**

(71) Applicants:
• **National University Corporation Tokai National
Higher Education and Research System
Nagoya-shi, Aichi 464-8601 (JP)**
• **Mipox Corporation
Oizumi-cho,
Hokuto-shi,
Yamanashi 409-1501 (JP)**

(72) Inventors:
• **HARADA, Shunta
Nagoya-shi Aichi 464-8601 (JP)**
• **MATSUBARA, Yasutaka
Nagoya-shi Aichi 464-8601 (JP)**
• **MURAYAMA, Kenta
Hokuto-shi Yamanashi 409-1501 (JP)**
• **MIZUTANI, Seiya
Hokuto-shi Yamanashi 409-1501 (JP)**
• **MIZUTANI, Seiji
Hokuto-shi Yamanashi 409-1501 (JP)**
• **MIZUTANI, Yuya
Hokuto-shi Yamanashi 409-1501 (JP)**

(74) Representative: **Seemann & Partner
Patentanwälte mbB
Raboisen 6
20095 Hamburg (DE)**

(54) **POLARIZING MICROSCOPE, CRYSTAL DEFECT EVALUATION DEVICE, AND CRYSTAL DEFECT EVALUATION METHOD**

(57)    A polarization microscope 1 includes a sample stage 4 on which a sample 8 is placed, a polarizer 3 provided on a side of the sample 8 toward a light source, and an analyzer 6 provided on a side of the sample toward an observer. At least one of the polarizer 3 and the analyzer 6 is placed such that a polarization direction is inclined with respect to an optical main axis of the sample 8 or placed such that an angle formed by a polarization direction of the analyzer 6 and a polarization direction of the polarizer is deviated from a right angle.

EP 4 485 035 A1

# FIG. 1

**Description**

TECHNICAL FIELD

The present disclosure relates to a technology of evaluating crystal defects by a polarization microscope.

BACKGROUND ART

Power devices, which are semiconductor devices that convert and control electric power, are widely used in fields such as home electric appliances, industrial equipment, automobiles, railways, high-voltage DC power transmission, wind power generation, and solar power generation. Currently, silicon (Si) is mainly used as a semiconductor for power devices, but silicon carbide (SiC) is attracting attention as a semiconductor material for next-generation power devices directed to further improvement in performance.

RELATED-ART LITERATURE

NON-PATENT LITERATURE

Non-Patent Literature 1: "Polytype Control in SiC Crystal Growth-Proposal of Kinetic Polytype Control Method (3C-SiC Solution Growth)-", Journal of The Japanese Association for Crystal Growth, Vol. 40, No. 4, pp. 253-260

SUMMARY OF INVENTION

TECHNICAL PROBLEM

Although the macroscopic defects have been greatly suppressed due to the improvement of SiC crystal growth technology, there still remain a large number of microscopic defects such as edge dislocations, spiral dislocations, and basal dislocations, which adversely affect the long-term reliability and characteristics of the device. Technology to accurately evaluate defects in semiconductor crystals is called for.

The present disclosure addresses the issue described above, and a purpose thereof is to improve the technology for evaluating crystal defects.

SOLUTION TO PROBLEM

A polarization microscope according to an embodiment of the present disclosure includes: a table on which a sample is placed; a polarizer provided on a side of the sample toward a light source; and an analyzer provided on a side of the sample toward an observer. At least one of the polarizer or the analyzer is placed such that a polarization direction is inclined with respect to an optical main axis of the sample or is placed such that an angle formed by a polarization direction of the analyzer and a polarization direction of the polarizer is deviated from a right angle.

Another embodiment of the present disclosure relates to a crystal defect evaluation apparatus. The apparatus includes: an image acquisition unit that acquires an image observed by the polarization microscope above; and a defect evaluation unit that evaluates a defect included in the sample based on the image acquired by the image acquisition unit.

Still another embodiment of the present disclosure relates to a crystal defect evaluation method. The method includes: acquiring an image observed by the polarization microscope above; and evaluating a defect included in the sample based on the acquired image.

Yet another embodiment of the present disclosure relates to a crystal defect evaluation method. The method includes: acquiring an image of a sample observed by a polarization microscope; and evaluating a defect included in the sample based on the acquired image, wherein the acquired image is an image in which a contrast is made clearer due to deviation of a polarization direction of at least one of a polarizer or an analyzer of the polarization microscope from an optical main axis of the sample or deviation of the analyzer from a crossed Nicols arrangement in relation to the polarizer.

Optional combinations of the aforementioned constituting elements, and implementations of the disclosure in the form of methods, apparatuses, systems, recording mediums, and computer programs may also be practiced as additional modes of the present disclosure.

ADVANTAGEOUS EFFECTS OF INVENTION

According to the present disclosure, the technology for evaluating crystal defects can be improved.

BRIEF DESCRIPTION OF DRAWINGS

[Fig. 1] Fig. 1 schematically shows a configuration of the polarization microscope according to the embodiment.

[Fig. 2] Fig. 2 shows a configuration of the control apparatus according to the embodiment.

[Fig. 3] Fig. 3 shows a configuration of the crystal defect evaluation apparatus according to the embodiment.

[Fig. 4] Fig. 4 shows polarization observation images of threading edge dislocations measured at varying directions of the Burgers vector and polarization microscope images calculated by assuming that the shear stress distribution in the Z direction is uniform as described above.

[Fig. 5] Fig. 5 shows measured polarization observation images (a) of threading edge dislocations included in a crystal and polarization microscope images (b) calculated by allowing for the shear stress distribution in the Z direction caused by the threading edge dislocation.

[Fig. 6] Fig. 6 shows a measured polarization observation image of a threading edge dislocation included in a crystal.

[Fig. 7] Fig. 7 shows polarization microscope images calculated by allowing for the shear stress distribution in the Z direction caused by the threading edge dislocation.

[Fig. 8] Fig. 8 shows an inclination angle of a threading edge dislocation.

[Fig. 9] Fig. 9 is a flowchart showing a sequence of steps of a crystal defect evaluation method according to the embodiment.

DESCRIPTION OF EMBODIMENTS

In the present disclosure, a technology of evaluating defects in crystals of SiC, etc. using a polarization microscope will be described.

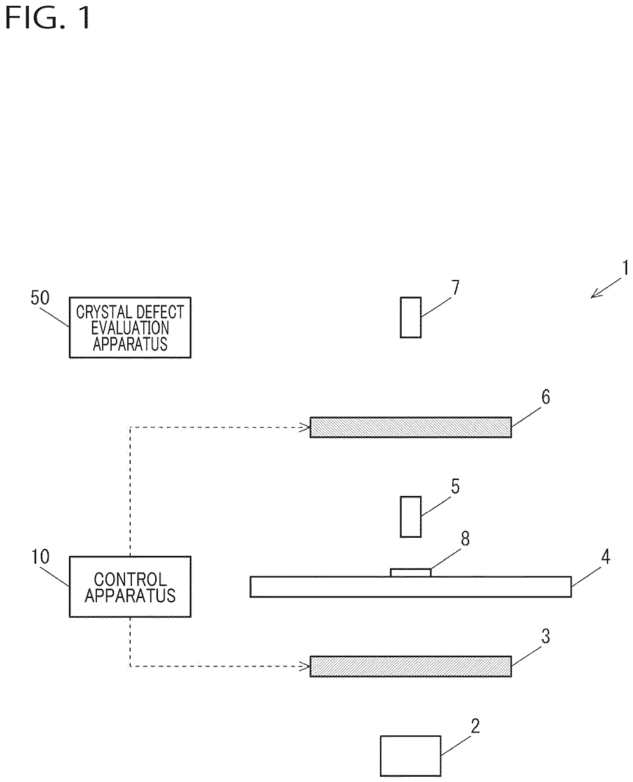

Fig. 1 schematically shows a configuration of the polarization microscope according to the embodiment. The polarization microscope 1 includes a light source 2, a polarizer 3, a sample stage 4, an objective lens 5, an analyzer 6, and an eyepiece 7.

The light emitted from the light source 2 passes through a sample 8 placed on the sample stage 4 and is observed via the objective lens 5 and the eyepiece 7. The polarizer 3 and the analyzer 6 are provided before and after the sample stage 4, respectively, and transmit linearly polarized light in which the electric field oscillates in only one direction. In this embodiment, the sample 8 is observed in a state where the transmission axes of the polarizer 3 and the analyzer 6 are perpendicular to each other (crossed Nicols).

When an optically isotropic sample having no anisotropy in the refractive index is placed on the sample stage 4, the polarization state of the linearly polarized light exiting the polarizer 3 does not change when passing through the sample. Therefore, the light passing through the sample does not pass through the analyzer 6 placed such that the transmission axis thereof is perpendicular to that of the polarizer 3. Therefore, the image observed from the eyepiece 7 will be a dark field.

When an optically anisotropic sample having birefringence, i.e., having a refractive index that depends on the polarization direction, is placed on the sample stage 4, and when the oscillation direction of the linearly polarized light exiting the polarizer 3 coincides with the optical axis of the sample, the polarization state of linearly polarized light does not change when the passes through the sample. Thus, as in the case of an optically isotropic sample, the image observed from the eyepiece 7 will be a dark field. When the oscillation direction of the linearly polarized light exiting the polarizer 3 is different from the optical axis of the sample, on the other hand, the light exiting the polarizer 3 is split into two polarization components when passing through the sample due to the birefringence of the sample. These polarization components interfere to change the polarization state so that the light passing through the sample passes through the analyzer 6. Therefore, the image observed from the eyepiece 7 will be a bright field, and a contrast of a polarization intensity determined by the optical path difference (retardation) in the light split into two components is observed.

When the crystal includes a defect, birefringence is produced due to a stress caused by the defect, and so a contrast is observed by the polarization microscope 1. Using such a phenomenon, it is possible to observe defects included in crystals of SiC, etc. non-destructively. Observation of dislocations in crystalline materials caused by stress-induced birefringence has been usually carried out along the main optical axis.

However, our study has revealed that a clearer contrast in a polarization observation image can be obtained due to deviation of the polarizer 3 from the extinction angle and deviation of the analyzer 6 from the crossed Nicols arrangement. Further, it became clear that the result of theoretical calculation of a polarization microscope image of the crystal that allows for the shear stress distribution caused by defects in the crystal corresponds to the contrast observed by the polarization microscope 1. Therefore, the defect in the crystal can be more accurately evaluated by observing the sample by the polarization microscope 1 in which the polarizer 3 or the analyzer 6 is slightly deviated from the extinction angle or the crossed Nicols arrangement, and comparing the observed contrast with the calculated result of a polarization microscope image of the crystal that allows for the shear stress distribution caused by the defect in the crystal.

In the polarization microscope 1 of this embodiment, at least one of the polarizer 3 or the analyzer 6 is placed such that the polarization direction is inclined with respect to the optical main axis of the sample 8 or such that the angle formed by the polarization direction of the analyzer 6 and the polarization direction of the polarizer 3 is deviated from a right angle. The angle (deviation) formed by the polarization direction of the polarizer 3 or the analyzer 6 and the optical main axis of the sample 8, and the angle (deviation) formed by the polarization direction of the polarizer 3 and the polarization direction of the analyzer 6 are adjusted such that a clearer contrast can be observed in accordance with the type, crystal structure, thickness of a sample 2, the type, size, number, orientation of defects to be observed, etc. The polarizer 3 and the analyzer 6 may be fixed at a predetermined angle or may be provided such that the angle is variable. In the latter case, the polarization microscope 1 includes a control apparatus 10 for controlling the angle of the polarizer 3 or the analyzer 6.

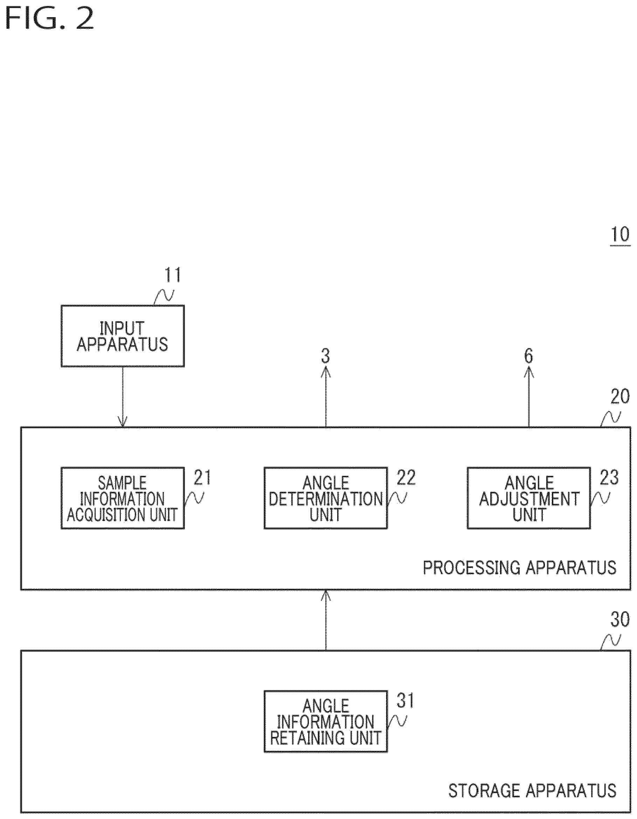

Fig. 2 shows a configuration of the control apparatus according to the embodiment. The control apparatus 10 includes an input apparatus 11, a storage apparatus 30, and a processing apparatus 20.

The input apparatus 11 transmits an instruction input by the user of the polarization microscope 1 to the processing apparatus 20. The input apparatus 11 may be a mouse, a keyboard, a touchpad, etc.

The storage apparatus 30 stores programs, data, etc. used by the processing apparatus 20. The storage apparatus 30 may be a semiconductor memory, a hard disk, etc. The storage apparatus 30 stores an angle information retaining unit 31.

The angle information retaining unit 31 retains a correspondence between i) information on the sample 2 such as the type, crystal structure, thickness of the sample 2, and the type, size, number, orientation of defects to be observed and ii) the angle of the polarizer 3 or the analyzer 6.

The processing apparatus 20 includes a sample information acquisition unit 21, an angle determination unit 22, and an angle adjustment unit 23. The features are implemented in hardware such as an arbitrary circuit, a CPU, a memory, or other LSI's, of any computer and in software such as a program loaded into a memory. The figure depicts functional blocks implemented by the cooperation of these elements. Therefore, it will be understood by those skilled in the art that these functional blocks may be implemented in a variety of manners by hardware only or by a combination of hardware and software.

The sample information acquisition unit 21 acquires information on the sample 2 from the user via the input apparatus 11. For example, the sample information acquisition unit 21 acquires information such as the type, crystal structure, thickness of the sample 2 and the type, size, number, orientation of defects to be observed.

The angle determination unit 22 determines the angle of the polarizer 3 or the analyzer 6 by referring to the angle information retaining unit 31 based on the information on the sample 2 acquired by the sample information acquisition unit 21.

The angle adjustment unit 23 controls a drive unit such as a motor for changing the angle of the polarizer 3 or the analyzer 6 to adjust the angle of the polarizer 3 or the analyzer 6 so that the angle determined by the angle determination unit 22 results.

This makes it possible to adjust, in accordance with the sample 2, the angle of the polarizer 3 or the analyzer 6 so that the contrast corresponding to the defect in the sample 8 can be observed more clearly. Accordingly, the accuracy of evaluating the defect can be improved.

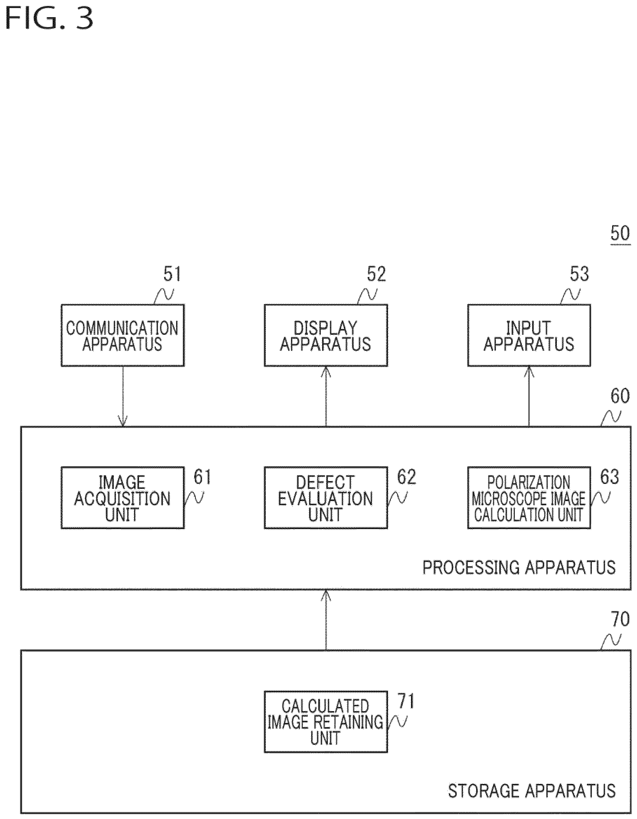

Fig. 3 shows a configuration of the crystal defect evaluation apparatus according to the embodiment. A crystal defect evaluation apparatus 50 includes a communication apparatus 51, a display apparatus 52, an input apparatus 53, a storage apparatus 70, and a processing apparatus 60. The crystal defect evaluation apparatus 50 may be a server apparatus, an apparatus such as a personal computer, or a portable terminal such as a mobile phone terminal, a smartphone, or a tablet terminal.

The communication apparatus 51 controls communication with the polarization microscope 1, etc. The communication apparatus 51 may communicate by any wired or wireless communication scheme. The display apparatus 52 displays a screen generated by the processing apparatus 60. The display apparatus 52 may be a liquid crystal display apparatus, an organic EL display apparatus, etc. The input apparatus 53 transmits an instruction input by the user of the crystal defect evaluation apparatus 50 to the processing apparatus 60. The input apparatus 53 may be a mouse, keyboard, touchpad, etc. The display apparatus 52 and the input apparatus 53 may be implemented as a touch panel.

The storage apparatus 70 stores programs, data, etc. used by the processing apparatus 60. The storage apparatus 70 may be a semiconductor memory, a hard disk, etc. The storage apparatus 70 stores a stress distribution retaining unit 71.

A calculated image retaining unit 71 associates and retains information on defects in the sample and a polarization microscope image calculated by allowing for the shear stress distribution produced in the sample due to the defects. The information on defects may be, for example, the type, number, size, position, shape, direction, angle, etc. of the defects. For evaluation of the type, number, size, position, shape, direction, angle, etc. of the defects included in the sample, the candidate image retaining unit 71 retains a number of polarization microscope images (hereinafter also referred to as "calculated images") calculated by varying at least one of the type, number, size, position, shape, direction, angle, etc. of the defects.

The processing apparatus 60 includes an image acquisition unit 61, a defect evaluation unit 62, and a polarization microscope image calculation unit 63. The features are implemented in hardware such as an arbitrary circuit, a CPU, a memory, or other LSI's, of any computer and in software such as a program loaded into a memory. The figure depicts functional blocks implemented by the cooperation of these elements. Therefore, it will be understood by those skilled in the art that these functional blocks may be implemented in a variety of manners by hardware only or by a combination of hardware and software.

The image acquisition unit 61 acquires a polarization microscope image (hereinafter also referred to as a "measured image") of a crystal from the polarization microscope 1 and stores the image in the storage apparatus 70.

The defect evaluation unit 62 evaluates defects included in the sample 2 based on the polarization microscope image acquired by the image acquisition unit 61. The defect evaluation unit 62 compares the measured image observed by the polarization microscope 1 with the calculated image retained in the calculated image retaining unit 71, determines a calculated image similar to the measured image, and acquires the information on the defect corresponding to the calculated image thus determined. The defect evaluation unit 62 displays the information on the defect thus acquired on the display apparatus 52.

The defect evaluation unit 62 may use artificial intelligence trained by machine learning, etc. to search for a calculated image similar to the measured image. The defect evaluation unit 62 may determine a calculated image highly similar to the measured image by calculating a sum of absolute values of the difference between the brightness value of the measured image and the brightness value of the calculated image, a sum of squares of the difference, a normalized cross-correlation, etc. Since the distribution of brightness values in the measured image may vary depending on measurement conditions, etc., the defect evaluation unit 62 may normalize the brightness value of the measured image before comparing the value with that of the calculated image. The defect evaluation unit 62 may evaluate the defect using an evaluator that receives a measured image and outputs the type, size, number, orientation, etc. of the defect. In this case, the crystal defect evaluation apparatus 50 may include a learning unit to train the artificial intelligence or the evaluator for image retrieval by machine learning.

For improvement the accuracy of evaluating the defect by referring to a polarization microscope image, it is desirable to calculate polarization microscope images including defects of various types, numbers, sizes, positions, shapes, directions, and angles and to retain the images in the calculated image retaining unit 71 as calculated images.

The polarization microscope image calculation unit 63 calculates a polarization microscope image of the sample by allowing for the shear stress distribution caused by the defect in the sample and associates and stores the calculation result and the information on the defect in the calculated image retaining unit 71. The calculated image may be acquired from another apparatus and stored in the calculated image retaining unit 71. In this case, the crystal defect evaluation apparatus 50 may not include a polarization microscope image calculation unit 63.

The polarization microscope image calculation unit 63 may calculate a polarization microscope image of the sample by solving a theoretical equation such as an index ellipsoid equation to determine the refractive index of polarized light propagating through the crystal to which a shear stress caused by the defect is applied. When it is impossible or difficult to solve the theoretical equation analytically, the polarization microscope image calculation unit 63 may calculate a polarization microscope image of the sample using a numerical analysis method such as a finite element method.

A method for calculating a polarization microscope image of the crystal by allowing for the shear stress distribution caused by edge dislocations included in the SiC crystal is shown below.

A SiC substrate for power devices is provided with a 4-degree off angle from the (0001) plane toward the [11-20] direction and optically includes anisotropy within the plane of the substrate. Given that the Z axis is defined to be parallel to the observation direction perpendicular to the substrate, the [1-100] direction within the plane perpendicular to the off angle is defined as the X axis, and the direction perpendicular to the X axis is defined as the Y axis, the index ellipsoid equation within the plane is as follows.

$$B_1{}^0 X2 + B_2{}^0 Y^2 + 2B_6{}^0 XY = 1,$$

where $B_1{}^0 = n_n{}^{-2}$, $B_2{}^0 = n_e{}^{-2}$, $B_6{}^0 = 0$, and $n_n$ and $n_e$ are the refractive indices of ordinary light and extraordinary light, respectively.

When a stress is applied by a threading dislocation, etc., the index ellipsoid equation will be as follows.

$$B_1{}^0 X^2 + B_2{}^0 Y^2 + 2B_6{}^0 XY = 1,$$

where $B_m = B_m{}^0 + \Pi_{mn}\sigma_n$ (m=1, 2, 6), and $\Pi_{mn}$ and $\sigma_n$ are a photoelastic tensor and a stress tensor, respectively, given by the following equations.

[Equation 1]

$$\Pi = \begin{pmatrix} p_{11} & p_{12} & p_{13} & & & \\ p_{12} & p_{11} & p_{13} & & & \\ p_{13} & p_{13} & p_{33} & & & \\ & & & p_{44} & & \\ & & & & p_{44} & \\ & & & & & p_{11} - p_{12} \end{pmatrix}, \sigma = \begin{pmatrix} \sigma_{xx} \\ \sigma_{yy} \\ \sigma_{zz} \\ 0 \\ 0 \\ \sigma_{xy} \end{pmatrix}$$

$$B_1 = B_1{}^0 + p_{11}\sigma_{xx} + p_{12}\sigma_{yy} + p_{13}\sigma_{zz}$$

$$B_2 = B_2{}^0 + p_{12}\sigma_{xx} + p_{11}\sigma_{yy} + p_{13}\sigma_{zz}$$

$$B_6 = (p_{11} - p_{12})\sigma_{xy}$$

For simplicity, it is assumed here that the stress caused by the defect is uniform in the Z direction. A method for calculating a polarization microscope image by allowing for the shear stress distribution in the Z direction will be described later. The refractive index in the crystal to which a stress is applied is obtained as a solution to the following eigenequation.

[Equation 2]

$$\begin{vmatrix} B_1 - \dfrac{1}{n^2} & B_6 \\ B_6 & B_2 - \dfrac{1}{n^2} \end{vmatrix} = 0$$

The retardation δ is proportional to the difference between these two refractive indices and can be given as follows.

[Equation 3]

$$\delta = \frac{2\pi}{\lambda_3}(n_2 - n_1)\Delta l$$

$$n_2 - n_1 = \frac{B_{ave}{}^{-\frac{3}{2}}}{2}\left[(B_2 - B_1)^2 + 4B_6{}^2\right]^{\frac{1}{2}}$$

where Δl denotes the thickness of the substrate, and $B_{ave}$ denotes the additive average of $B_1$ and $B_2$. Further, the angle α formed by the optical main axis direction and the X axis satisfies the following equation.

$$2\alpha = \tan^{-1}(2B_6/(B_2-B_1))$$

The angle formed by the polarization direction of the polarizer 3 and the X axis is denoted by $\beta$, and the angle formed by the polarization directions of the polarizer 3 and the analyzer 6 is denoted by $\pi/2+\varepsilon$, and a case is considered where there are a deviation $\beta$ of the polarizer 3 and a deviation $\varepsilon$ of the analyzer 6 from the crossed Nicols arrangement. In this case, the polarization intensity is represented as follows, given that the incident intensity is denoted by I0.

[Equation 4]

$$I = I_0 \left\{ \sin^2 \varepsilon + \sin 2(\beta + \alpha) \sin 2(\beta + \alpha - \varepsilon) \sin^2 \frac{\delta}{2} \right\}$$

(1) In the case $\varepsilon=0$

Given that the deviation $\varepsilon$ of the analyzer 6 from the crossed Nicols arrangement is 0, the polarization intensity will be as follows.

[Equation 5]

$$I = I_0 \left\{ \sin^2 2(\beta + \alpha) \sin^2 \frac{\delta}{2} \right\}$$

$$I = I_0 \frac{\pi^2 \Delta l^2}{4 B_{ave}^{\ 3} \lambda^2} \left[ (B_2 - B_1)^2 + 4 B_6^{\ 2} \right] \left[ \sin 2(\beta + \alpha) \right]^2$$

$$\sin 2(\beta + \alpha) = \sin 2\beta \cos 2\alpha + \sin 2\alpha \cos 2\beta$$

$$= \frac{2 B_6 \cos 2\beta + (B_2 - B_1) \sin 2\beta}{\sqrt{(B_2 - B_1)^2 + 4 B_6^{\ 2}}}$$

[Equation 6]

$$I = I_0 \frac{\pi^2 \Delta l^2}{4 B_{ave}^{\ 3} \lambda^2} \left[ 2 B_6 \cos 2\beta + (B_2 - B_1) \sin 2\beta \right]^2$$

$$= I_0 \frac{\pi^2 \Delta l^2}{4 B_{ave}^{\ 3} \lambda^2} \left[ 4 B_6^{\ 2} \cos^2 2\beta + 4 B_6 (B_2 - B_1) \sin 2\beta \cos 2\beta \right.$$

$$\left. + (B_2 - B_1)^2 \sin^2 2\beta \right]$$

Assuming here that birefringence caused by a stress is sufficiently small compared with birefringence caused by the off angle and that $\beta$ is close to 0,

[Equation 7]

$$I = I_0 \frac{\pi^2 \Delta l^2}{\lambda^2 B_{ave}{}^3} \left[ B_6{}^2 + 2\beta B_6 (B_2^0 - B_1^0) + \beta^2 (B_2^0 - B_1^0)^2 \right]$$

because $B_2 - B_1 \approx B_2{}^0 - B_1{}^0$, $\sin 2\beta \approx 2\beta$, $\cos 2\beta \approx 1$.
Since $B_2{}^0 - B_1{}^0 \gg B6$

[Equation 8]

$$I = I_0 \frac{\pi^2 \Delta l^2}{\lambda^2 B_{ave}{}^3} \left[ 4\beta B_6 (B_2^0 - B_1^0) + \beta^2 (B_2^0 - B_1^0)^2 \right]$$

Only the first term on the right side produces a change in contrast, and the intensity is proportional to $B_6$. The change in the background of the second term on the right side is proportional to $\sigma_{xy}$, and the contrast is inverted depending on $\beta$. In a state of complete extinction at $\beta=0$, a contrast proportional to $B_6{}^2$ is produced.

(2) In the case $\beta=0$

When the deviation $\beta$ of the polarization direction of the polarizer 3 from the X axis is 0, the polarization intensity will be follows.

[Equation 9]

$$I = I_0 \left\{ \sin^2 \varepsilon + \sin 2\alpha \sin 2(\alpha - \varepsilon) \sin^2 \frac{\delta}{2} \right\}$$

$$= I_0 \left\{ \sin^2 \varepsilon + \frac{2B_6}{\sqrt{(B_2 - B_1)^2 + 4B_6{}^2}} \left( \frac{2B_6}{\sqrt{(B_2 - B_1)^2 + 4B_6{}^2}} \cos 2\varepsilon - \frac{B_2 - B_1}{\sqrt{(B_2 - B_1)^2 + 4B_6{}^2}} \sin 2\varepsilon \right) \sin^2 \frac{\delta}{2} \right\}$$

$$= I_0 \left\{ \sin^2 \varepsilon + \left( 4B_6{}^2 \cos 2\varepsilon - 2B_6 (B_2 - B_1) \sin 2\varepsilon \right) \frac{\pi^2 \Delta l^2}{4B_{ave}{}^3 \lambda^2} \right\}$$

Assuming that birefringence caused by a stress is sufficiently small compared to birefringence caused by the off angle and that $\beta$ is close to 0,

[Equation 10]

$$= I_0 \left\{ \sin^2 \varepsilon + \left( 4B_6{}^2 \cos 2\varepsilon - 2B_6 (B_2^0 - B_1^0) \sin 2\varepsilon \right) \frac{\pi^2 \Delta l^2}{4B_{ave}{}^3 \lambda^2} \right\}$$

because $B_2 - B_1 \approx B_2{}^0 - B_1{}^0$, $\sin\varepsilon \approx \varepsilon$, $\cos 2\varepsilon \approx 1$.
Since $B_2{}^0 - B_1{}^0 \gg B6$,

[Equation 11]

$$I = I_0 \left\{ \sin^2 \varepsilon + (B_6(B_2^0 - B_1^0) \sin 2\varepsilon) \frac{\pi^2 \Delta l^2}{B_{ave}{}^3 \lambda^2} \right\}$$

The first term on the right side shows a constant value regardless of the stress, and the second term on the right side is proportional to $B_6$, i.e., the shear stress within the plane.

(3) In the case $\varepsilon \neq 0$, $\beta \neq 0$

In the case neither the deviation $\varepsilon$ of the analyzer 6 from the crossed Nicols arrangement nor the deviation $\beta$ of the polarization direction of the polarizer 3 from the X axis is 0, the polarization intensity will be as follows.

[Equation 12]

$$I = I_0 \left\{ \sin^2 \varepsilon + \sin 2(\beta + \alpha) \sin 2(\beta + \alpha - \varepsilon) \sin^2 \frac{\delta}{2} \right\}$$

$$= I_0 \left\{ \sin^2 \varepsilon + (\sin^2 2(\beta + \alpha) \cos 2\varepsilon - \sin 2(\beta + \alpha) \cos 2(\beta + \alpha) \sin 2\varepsilon) \sin^2 \frac{\delta}{2} \right\}$$

$$= I_0 \left\{ \sin^2 \varepsilon + ([2B_6 \cos 2\beta + (B_2 - B_1) \sin 2\beta]^2 - (2B_6 \cos 2\beta + (B_2 - B_1) \sin 2\beta)((B_2 - B_1) \cos 2\beta - 2B_6 \sin 2\beta) \sin 2\varepsilon) \frac{\pi^2 \Delta l^2}{B_{ave}{}^3 \lambda^2} \right\}$$

$$= I_0 \left\{ \sin^2 \varepsilon + \left( 4B_6{}^2(\cos 2\beta + \sin 2\beta \sin 2\varepsilon) \cos 2\beta + \left( 4B_6(B_2^0 - B_1^0) - \sin 2\varepsilon \left( (B_2^0 - B_1^0)^2 - 4B_6{}^2 \right) \right) \cos 2\beta \sin 2\beta \right. \right.$$

$$\left. \left. + (B_2^0 - B_1^0)^2 (\sin 2\beta - \sin 2\varepsilon \cos 2\beta) \sin 2\beta \right) \frac{\pi^2 \Delta l^2}{B_{ave}{}^3 \lambda^2} \right\}$$

$$= I_0 \left\{ \sin^2 \varepsilon + \left( \left( 4B_6(B_2^0 - B_1^0) - \sin 2\varepsilon \left( (B_2^0 - B_1^0)^2 \right) \right) \cos 2\beta \sin 2\beta + (B_2^0 - B_1^0)^2 (\sin 2\beta - \sin 2\varepsilon \cos 2\beta) \sin 2\beta \right) \frac{\pi^2 \Delta l^2}{B_{ave}{}^3 \lambda^2} \right\}$$

When the conditions assumed in the above calculation are satisfied, it is considered that the contrast of the polarization intensity calculated as described above is observed in the image observed by the polarization microscope 1.

The polarization microscope image calculation unit 63 sets the type, number, size, position, shape, direction, angle, etc. of defects included in the crystal and calculates the shear stress distribution produced in the crystal due to the defects thus set. The polarization microscope image calculation unit 63 calculates the polarization microscope image as described above by allowing for the calculated shear stress distribution. The polarization microscope image calculation unit 63 associates and stores the calculated polarization microscope image and the information on defects in the calculated image retaining unit 71.

A description will be given of a method of calculating a polarization microscope image by further allowing for the shear stress distribution in the Z direction. By calculating a polarization microscope image, allowing for not only the shear stress distribution within the XY plane caused by the defect but also the shear stress distribution in the Z direction, and by comparing the calculated image with the measured image observed by the polarization microscope 1, not only the shape in the XY direction but also the three-dimensional shape of the defect included in the crystal can be evaluated.

The polarization microscope image calculation unit 63 segments the crystal to be observed into a plurality of regions in the Z direction and calculates, in steps, propagation of polarized light passing through each region. The number, thickness, etc. of regions may be determined according to the type, number, size, position, shape, direction, angle, etc. of the defect to be evaluated, the required accuracy, etc.

The polarization microscope image calculation unit 63 may discretely calculate a change in the refractive index of polarized light inside the sample, by assuming that the stress distribution in each region in the thickness direction is uniform and birefringence is produced only at the boundary of the region. This makes it possible to evaluate the three-dimensional shape of the defect with good accuracy while reducing the computational load. In this case, as described above, birefringence produced at the boundary of the region is calculated for each region based on the shear stress distribution within the boundary plane. First, the polarized light incident on the surface of the first layer is split into an ordinary light $E_0$

and an extraordinary light $E_e$ by birefringence. The polarization microscope image calculation unit 63 calculates the retardation between the ordinary light $E_0$ and the extraordinary light $E_e$ occurring when the polarized light passes through the first layer according to Equation 3. Subsequently, the normal light $E_0$ incident on the boundary plane between the first layer and the second layer is split into a normal light $E'_{0,1}$ and an abnormal light $E'_{e,1}$, and the abnormal light $E_e$ is split into a normal light $E'_{0,2}$ and an abnormal light $E'_{e,2}$. The polarization microscope image calculation unit 63 synthesizes the light having the same refractive index to produce an ordinary light $E'_0 (=E'_{0,1}+E'_{0,2})$ and an extraordinary light $E'_e (=E'_{e,1}+E'_{e,2})$. The polarization microscope image calculation unit 63 calculates the retardation of the ordinary light $E'_0$ and the extraordinary light $E'_e$ occurring when the polarized light passes through the second layer according to Equation 3. The polarization microscope image calculation unit 63 calculates the retardation accumulated in the respective layers by repeating the above calculation through the last layer. The polarization microscope image calculation unit 63 calculates a polarization microscope image of the crystal to be observed by calculating the polarization intensity of the polarized light passing through the analyzer 6 as described above. The polarization microscope image calculation unit 63 associates and stores the calculated polarization microscope image and the information on the defect in the calculated image retaining unit 71.

[Exemplary embodiment]

A polarization observation image of a SiC crystal from the polarization microscope 1 was examined. As a sample to be observed, a 4H-SiC substrate prepared by chemical vapor deposition method was used. As the polarization microscope 1, SiC crystal dislocation high-sensitivity visualization apparatus XS-1 manufactured by Mipox Co., Ltd. was used. In addition to polarization observation, dislocations were evaluated by X-ray topography observation using radiation light. It is known that an X-ray topography image exhibits a different contrast of a threading edge dislocation depending on the direction of the Burgers vector. We investigated the correspondence between the direction of the Bergers vector of the threading edge dislocation and the contrast in the polarization observation image by making an observation at the same place.

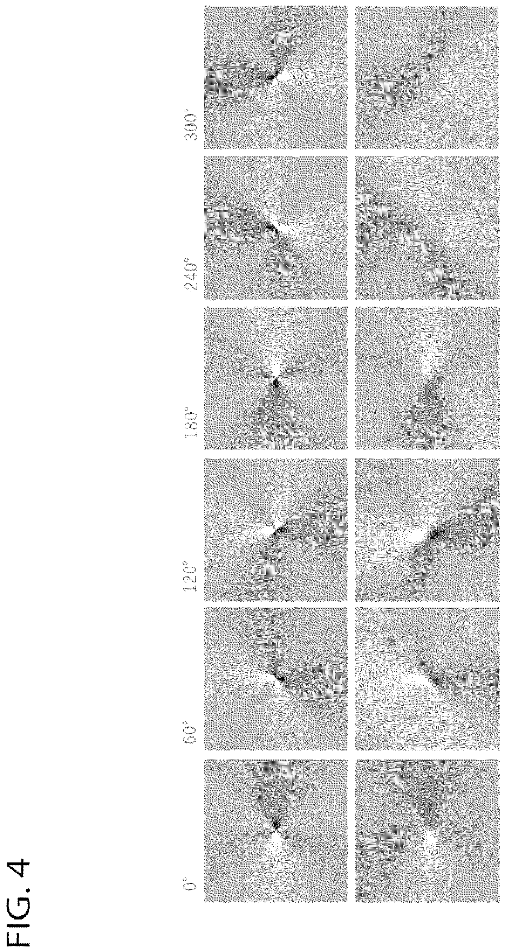

Fig. 4 shows polarization observation images of threading edge dislocations measured at varying directions of the Burgers vector and polarization microscope images calculated by assuming that the shear stress distribution in the Z direction is uniform as described above. It can be seen that the measured polarization observation image of the edge dislocation and the calculated polarization microscope image correspond to each other, and the Burgers vector of the threading edge dislocation can be determined from the polarization observation image. Further, the SiC substrate contains a dislocation (threading mixed dislocation) in which the dislocation line is [0001] and the Burgers vector is <0001>+1/3<-1-120>, suggesting that the edge component of the Burgers vector of the threading mixed dislocation can also be determined by polarization observation. Thus, it is demonstrated that edge component of the threading dislocation could be determined from a polarization observation image by comparing the measured polarization observation image with the calculated polarization microscope image.

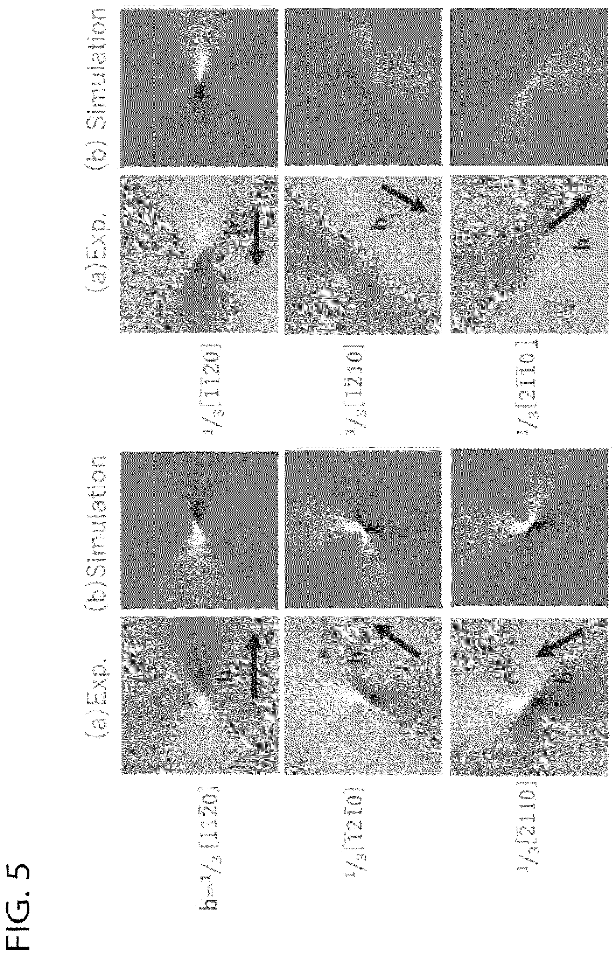

Fig. 5 shows measured polarization observation images (a) of threading edge dislocations included in a crystal and polarization microscope images (b) calculated by allowing for the shear stress distribution in the Z direction caused by the threading edge dislocation. For the direction of inclination and angle of each threading edge dislocation, values reported in a published paper (R. Tanuma, et al. J. Appl. Phys. 124 (2018) 125703) are used. As shown in Fig. 5, the contrast intensity of the measured image varies depending on the direction of the Burgers vector, but the tendency in contrast intensity similar to that of the measured image is reproduced in the calculated image. Further, the contrast boundary in the measured image is inclined at b=1/3[11-20], 1/3[-1-120], but the direction and angle of the contrast boundary similar to those of the measured image are reproduced in the calculated image as well. It is demonstrated, based on the above results, that the above calculation method makes it possible to represent a change in the polarization image depending on the direction of inclination and angle of the threading dislocation, and that not only the Bergers vector of the threading dislocation but also the direction of inclination and angle can be evaluated by comparing the calculated image with the measured image.

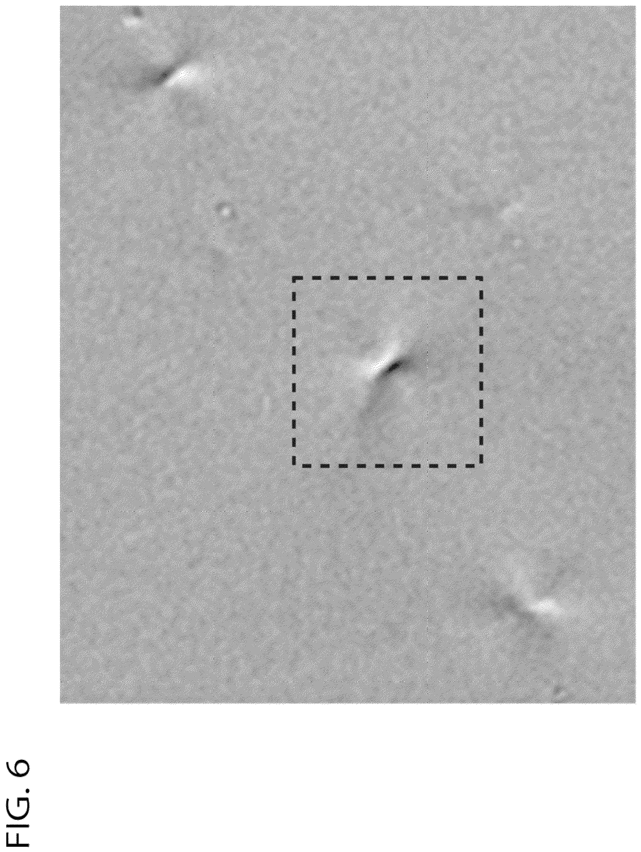

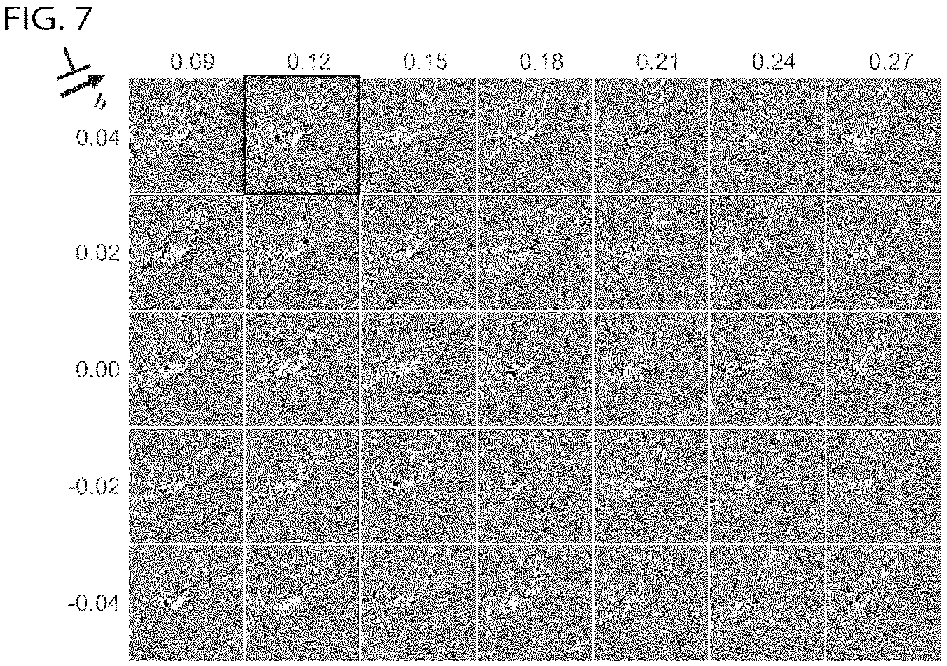

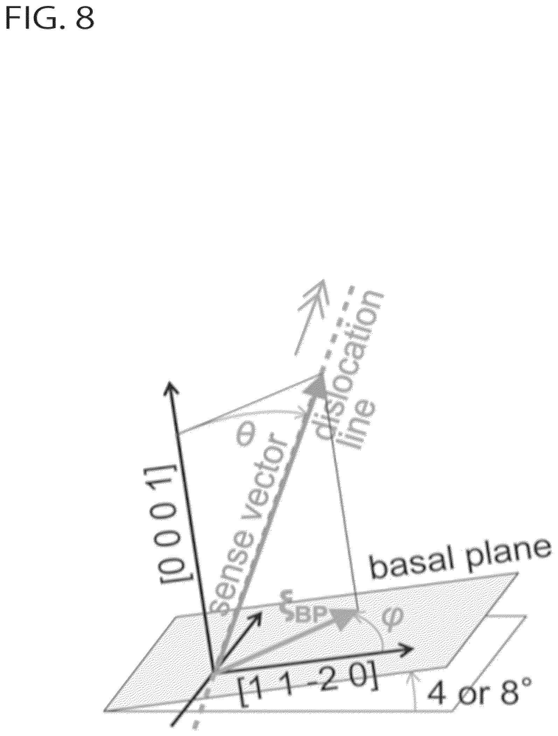

Fig. 6 shows a measured polarization observation image of a threading edge dislocation included in a crystal. Fig. 7 shows polarization microscope images calculated by allowing for the shear stress distribution in the Z direction caused by the threading edge dislocation. The x, y coordinates of the directional vector $\xi$ derived from inclining a unit vector of length 1 in the direction of the dislocation line of the threading edge dislocation are denoted, as shown in Fig. 8, by $\xi_1$, $\xi_2$, respectively. That is, the x, y coordinates that result when the directional vector $\xi$ is rotated by $\theta$ from [0001] in the [11-20] direction and then rotated by $\psi$ around [0001] are $[\xi_1,\xi_2] = [\sin\theta\cos\psi, \sin\theta\sin\psi]$. The calculated images shown in Fig. 7 are calculated by varying $\xi_1$ in the range 0.09-0.27 in steps of 0.03 and varying $\xi_2$ in the range -0.04-0.04 in steps of 0.02. Comparing the measured image with the calculated images, the calculated image corresponding to $\xi_1=0.04$ and $\xi_2=0.12$ is most similar to the measured image. Therefore, it can be evaluated that $\xi_1$, $\xi_2$ of this threading edge dislocation are $\xi_1=0.04$ and $\xi_2=0.12$. Based on $\xi_1$, $\xi_2$ here, the inclination angle $\theta$ and $\psi$ of this threading edge dislocation can be calculated according to the above equation. As described above, the calculated image most similar to the measured image may be automatically determined based on normalized cross-correlation, etc.

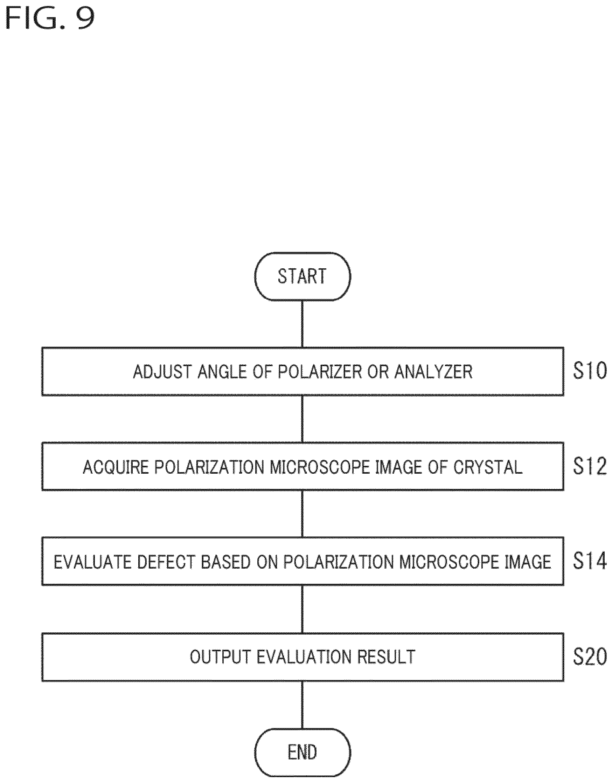

Fig. 9 is a flowchart showing a sequence of steps of a crystal defect evaluation method according to the embodiment. When the angle of the polarizer 3 or the analyzer 6 of the polarization microscope 1 is variable, the control apparatus 10 adjusts the angle of the polarizer 3 or the analyzer 6 in accordance with the sample 2 (S10). When the angle of the polarizer 3 and the analyzer 6 of the polarization microscope 1 is not variable, step S10 is omitted.

The image acquisition unit 61 of the crystal defect evaluation apparatus 50 acquires a polarization microscope image of the crystal from the polarization microscope 1 (S12). The defect evaluation unit 62 evaluates a defect included in the sample 2 based on the polarization microscope image acquired (S14). The defect evaluation unit 62 outputs an evaluation result (S20).

The present disclosure has been described above based on an exemplary embodiment. The exemplary embodiment is intended to be illustrative only and it will be understood by those skilled in the art that various modifications to constituting elements and processes could be developed and that such modifications are also within the scope of the present invention.

The technology of this embodiment can also be used to evaluate crystal defects in semiconductor materials other than silicon carbide.

INDUSTRIAL APPLICABILITY

The present disclosure relates to a technology of evaluating crystal defects by a polarization microscope.

REFERENCE SIGNS LIST

1 polarization microscope, 2 light source, 2 sample, 3 polarizer, 4 sample stage, 5 objective lens, 6 analyzer, 7 eyepiece, 8 sample, 10 control apparatus, 21 sample information acquisition unit, 22 angle determination unit, 23 angle adjustment unit, 31 angle information retaining unit, 50 crystal defect evaluation apparatus, 61 image acquisition unit, 62 defect evaluation unit, 63 polarization microscope image calculation unit, 71 calculated image retaining unit

**Claims**

1. A polarization microscope comprising:

   a table on which a sample is placed;
   a polarizer provided on a side of the sample toward a light source; and
   an analyzer provided on a side of the sample toward an observer,
   wherein at least one of the polarizer or the analyzer is placed such that a polarization direction is inclined with respect to an optical main axis of the sample or is placed such that an angle formed by a polarization direction of the analyzer and a polarization direction of the polarizer is deviated from a right angle.

2. The polarization microscope according to claim 1,

   wherein the polarization direction of at least one of the polarizer and the analyzer is variable,
   the polarization microscope further comprising:
   a control apparatus that controls the polarization direction of at least one of the polarizer and the analyzer.

3. The polarization microscope according to claim 2,
   wherein the control apparatus controls the polarization direction of at least one of the polarizer and the analyzer based on at least one of a type, crystal structure, thickness, and orientation of the sample and a type, size, number, and orientation of defects to be observed.

4. A crystal defect evaluation apparatus comprising:

   an image acquisition unit that acquires an image observed by the polarization microscope according to any one of claims 1 to 3; and
   a defect evaluation unit that evaluates a defect included in the sample based on the image acquired by the image acquisition unit.

5. The crystal defect evaluation apparatus according to claim 4,

wherein the defect evaluation unit evaluates a defect included in the sample by comparing a polarization microscope image of the sample calculated by allowing for a stress distribution caused by the defect included in the sample with the image acquired by the image acquisition unit.

6. The crystal defect evaluation apparatus according to claim 5,
wherein the defect evaluation unit evaluates at least one of a type, size, direction, and angle of a defect included in the sample by determining, from a plurality of polarization microscope images of the sample calculated by varying at least one of a type, size, shape, direction, and angle of the defect included in the sample, a polarization microscope image similar to the image acquired by the image acquisition unit.

7. The crystal defect evaluation apparatus according to claim 5 or 6, further comprising:
a polarization microscope image calculation unit that calculates a polarization microscope image of the sample by allowing for a stress distribution caused by a defect included in the sample.

8. The crystal defect evaluation apparatus according to claim 7,
wherein the polarization microscope image calculation unit sets information on a defect included in the sample and calculates a polarization microscope image of the sample including the defect for which the information is set, by calculating propagation of polarized light inside the sample by allowing for a stress distribution caused by the defect for which the information is set.

9. The crystal defect evaluation apparatus according to claim 7 or 8,
wherein the polarization microscope image calculation unit calculates a polarization microscope image of the sample by segmenting the sample into a plurality of regions in a thickness direction and calculating propagation of polarized light in respective regions in steps.

10. The crystal defect evaluation apparatus according to claim 9,
wherein the polarization microscope image calculation unit calculates propagation of polarized light inside the sample by assuming that a stress distribution in a thickness direction in each region is uniform and that birefringence is produced only at a boundary of the region.

11. The crystal defect evaluation apparatus according to claim 10,
wherein the polarization microscope image calculation unit calculates a change in refractive index due to birefringence produced at the boundary of the region based on a stress distribution within a boundary plane.

12. The crystal defect evaluation apparatus according to any one of claims 9 to 11,
wherein the defect evaluation unit evaluates a three-dimensional shape of a defect included in the sample.

13. The crystal defect evaluation apparatus according to any one of claims 4 to 12,

wherein the image acquisition unit acquires an image of a silicon carbide (SiC) crystal provided with an off angle, and
wherein the defect evaluation unit evaluates a defect in the silicon carbide crystal.

14. A crystal defect evaluation method comprising:

acquiring an image observed by the polarization microscope according to any one of claims 1 to 3; and
evaluating a defect included in the sample based on the acquired image.

15. A crystal defect evaluation method comprising:

acquiring an image of a sample observed by a polarization microscope; and
evaluating a defect included in the sample based on the acquired image,
wherein the acquired image is an image in which a contrast is made clearer due to deviation of a polarization direction of at least one of a polarizer or an analyzer of the polarization microscope from an optical main axis of the sample or deviation of the analyzer from a crossed Nicols arrangement in relation to the polarizer.

EP 4 485 035 A1

FIG. 1

14

FIG. 2

# FIG. 3

50

51
COMMUNICATION APPARATUS

52
DISPLAY APPARATUS

53
INPUT APPARATUS

60

PROCESSING APPARATUS

61
IMAGE ACQUISITION UNIT

62
DEFECT EVALUATION UNIT

63
POLARIZATION MICROSCOPE IMAGE CALCULATION UNIT

70

STORAGE APPARATUS

71
CALCULATED IMAGE RETAINING UNIT

FIG. 4

FIG. 5

FIG. 6

FIG. 7

FIG. 8

# FIG. 9

```
            ┌─────────┐
            │  START  │
            └────┬────┘
                 │
    ┌────────────┴──────────────────────────────┐
    │    ADJUST ANGLE OF POLARIZER OR ANALYZER   │  S10
    └────────────┬──────────────────────────────┘
                 │
    ┌────────────┴──────────────────────────────┐
    │  ACQUIRE POLARIZATION MICROSCOPE IMAGE OF CRYSTAL  │  S12
    └────────────┬──────────────────────────────┘
                 │
    ┌────────────┴──────────────────────────────┐
    │ EVALUATE DEFECT BASED ON POLARIZATION MICROSCOPE IMAGE │  S14
    └────────────┬──────────────────────────────┘
                 │
    ┌────────────┴──────────────────────────────┐
    │         OUTPUT EVALUATION RESULT           │  S20
    └────────────┬──────────────────────────────┘
                 │
            ┌────┴────┐
            │   END   │
            └─────────┘
```

| | INTERNATIONAL SEARCH REPORT | International application No. |
|---|---|---|
| | | **PCT/JP2022/046752** |

**A. CLASSIFICATION OF SUBJECT MATTER**

*G02B 21/00*(2006.01)i; *G01J 1/04*(2006.01)i; *G02B 21/36*(2006.01)i
FI: G02B21/00; G02B21/36; G01J1/04 H

According to International Patent Classification (IPC) or to both national classification and IPC

**B. FIELDS SEARCHED**

Minimum documentation searched (classification system followed by classification symbols)

G02B21/00; G01J1/04; G02B21/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/044834 A1 (NIKON CORPORATION) 09 April 2009 (2009-04-09) first embodiment, fig. 1 | 1, 4, 13-15 |
| A | first embodiment, fig. 1 | 2, 3, 5-12 |
| X | JP 3207764 U (SHIMADZU CORP) 09 November 2016 (2016-11-09) paragraphs [0036]-[0060], fig. 1 | 1-4, 13-15 |
| A | paragraphs [0036]-[0060], fig. 1 | 5-12 |
| X | WO 2018/207569 A1 (SONY CORP) 15 November 2018 (2018-11-15) paragraphs [0059]-[0078], fig. 2 | 1-4, 13-15 |
| A | paragraphs [0059]-[0078], fig. 2 | 5-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 January 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No. |
| --- | --- |
| | **PCT/JP2022/046752** |

| Patent document cited in search report | Publication date (day/month/year) | Patent family member(s) | Publication date (day/month/year) |
| --- | --- | --- | --- |
| WO 2009/044834 A1 | 09 April 2009 | US 2010/0188748 A1 first embodiment, fig. 1 | |
| JP 3207764 U | 09 November 2016 | (Family: none) | |
| WO 2018/207569 A1 | 15 November 2018 | US 2020/0154988 A1 paragraphs [0086]-[0105], fig. 4 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Polytype Control in SiC Crystal Growth-Proposal of Kinetic Polytype Control Method (3C-SiC Solution Growth). *Journal of The Japanese Association for Crystal Growth*, vol. 40 (4), 253-260

- **R. TANUMA et al.** *J. Appl. Phys.*, 2018, vol. 124, 125703